# EUROPÄISCHE PATENTSCHRIFT

(11) **EP 3 655 257 B1**
(45) Veröffentlichungstag und Bekanntmachung des Hinweises auf die Patenterteilung: **23.03.2022**
(21) Anmeldenummer: 18740754.9
(22) Anmeldetag: 05.07.2018
(51) Int. Cl.: B60B 27/00, F16D 65/12

(54) **RADNABE, EINE BREMSSCHEIBE, EIN BEFESTIGUNGSMITTEL UND EIN SYSTEM AUS RADNABE, BREMSSCHEIBE UND BEFESTIGUNGSMITTEL**
WHEEL HUB, A BRAKE DISC, A FASTENING MEANS, AND A SYSTEM FORMED OF WHEEL HUB, BRAKE DISC AND FASTENING MEANS
MOYEU, DISQUE DE FREIN, MOYEN DE FIXATION ET SYSTÈME COMPOSÉ DU MOYEU, DU DISQUE DE FREIN ET DU MOYEN DE FIXATION

(30) Priorität: 18.07.2017 DE 102017116134
(43) Veröffentlichungstag der Anmeldung: 27.05.2020
(73) Patentinhaber: SAF-HOLLAND GmbH, 63856 Bessenbach (DE)
(72) Erfinder: WALLMEIER, Stefan, 63773 Goldbach (DE); AUMÜLLER, Ralf, 60437 Frankfurt (DE)
(74) Vertreter: Müller Schupfner & Partner Patent- und Rechtsanwaltspartnerschaft mbB
(86) Internationale Anmeldenummer: PCT/EP2018/068243
(87) Internationale Veröffentlichungsnummer: WO 2019/015983

(56) Entgegenhaltungen:
- EP-A1- 2 647 891
- EP-A1- 3 179 129
- DE-A1- 10 133 985
- DE-A1- 10 246 939
- DE-A1-102012 001 601
- DE-A1-102017 106 461
- JP-A- 2005 289 147
- US-A- 6 139 215
- US-A1- 2016 025 165

## Beschreibung

Die vorliegende Erfindung betrifft eine Radnabenanordnung, eine Bremsscheibenanordnung und ein System aus einer Radnabe, einer Bremsscheibe und einem Befestigungsmittel. Radnaben sind aus dem Stand der Technik hinlänglich bekannt. Sie dienen der Anbindung eines Rads an ein Achselement, beispielsweise an eine Achse eines Nutzfahrzeugs. Hierbei werden üblicherweise Bremsscheiben drehfest an die Radnabe angebunden. Typischerweise werden die Bremsscheiben mittels in die Radnabe eingreifender Schrauben axial fixiert. Diese axiale Fixierung mittels der Schraube führt hierbei zu einer kraftschlüssigen Verbindung an einer Schnittstelle zwischen der Radnabe und der an der Radnabe anliegenden Bremsscheibe. Um den im Betrieb auftretenden Belastungen gerecht zu werden, werden im Stand der Technik vergleichsweise hohe Anforderungen an ein Befestigungsmittel gestellt, mit dem die Bremsscheibe an der Radnabe axial fixiert wird.

Die EP 3 179 129 A1 beschreibt ein Verbindungselement zur Verbindung mit einer Bremsscheibenkonstruktion und einer Radlagereinheit für ein Fahrzeug. Das Verbindungselement umfasst einen Befestigungsanordnung zur lösbaren Befestigung der Bremsscheibenkonstruktion und eine Befestigungsanordnung zur lösbaren Befestigung an der Radlagereinheit.

Die US 6,139,215 A zeigt eine Scheibennabenverbindung zur Verbindung einer Bremsscheibe mit einer Nabe, insbesondere für Nutzfahrzeugbremsscheiben. Dabei übertragen Zwischenelemente ein Drehmoment von Nocken der Nabe zu Stützelementen der Scheibe.

Die JP 2005/289147 A offenbart eine Radlageranordnung für ein Rad, welche in Gewicht und Größe reduziert ist.

Die US 2016/0025165 A1 beschreibt eine Anordnung zur Montage einer Scheibenbremse an einer Nabenanordnung für ein Fahrzeug, wobei die Anordnung Befestigungsringe und optional Buchsenblöcke umfasst, die zwischen einer Achsnabe und einer Bremsscheibe so angeordnet sind, dass die Übertragung der Bremskräfte von der Bremsscheibe auf die Achsnabe möglich ist und gleichzeitig die Wärmeübertragung von der Scheibe auf die Nabe minimiert wird.

Angesichts des beschriebenen Stands der Technik ist es somit eine Aufgabe der vorliegenden Erfindung eine verbesserte Radnabe bereitzustellen, mit der eine hohe Betriebssicherheit gewährleistet und größere Bremsmomente aufgenommen werden können.

Diese Aufgabe wird gelöst durch eine Radnabe gemäß Anspruch 1, eine Bremsscheibe gemäß Anspruch 6, und ein System aus einer Bremsscheibe, einer Radnabe und einem Befestigungsmittel gemäß Anspruch 8. Weitere Vorteile und Merkmale der Erfindung ergeben sich aus den Unteransprüchen sowie der Beschreibung und den beigefügten Figuren.

Erfindungsgemäß ist eine Radnabe, insbesondere für ein Nutzfahrzeug, die im Betrieb um eine Rotationsachse rotiert, vorgesehen, umfassend eine Bremsscheibenanlagefläche, an der in einem montierten Zustand eine Bremsscheibe anliegt, und eine in axialer Richtung zur Bremsscheibenanlagefläche versetzte und zur Rotationsachse schräg, d. h. zur Rotationsachse in einem Winkel ungleich 0°, 90° oder 180°, verlaufende radnabenseitige Kontaktfläche, an der im montierten Zustand zumindest ein Teil eines Befestigungsmittels, mit dem die Bremsscheibe an der Radnabe befestigbar bzw. befestigt ist, anliegt. Im Gegensatz zum Stand der Technik weist die erfindungsgemäße Radnabe eine schräg verlaufende Kontaktfläche auf, die die Verwendung eines Befestigungsmittels gestattet, welches zumindest teilweise konusförmig ausgestaltet ist oder ein Bestandteil aufweist, der konusförmig ausgestaltet ist. Beispielsweise umfasst das Befestigungsmittel neben einem Bolzen oder einer Schraube mit einem Bolzenkopf oder Schraubenkopf ein Konuselement. Mittels dieses Konuselements ist es in vorteilhafter Weise möglich, die Bremsscheibe mit der Radnabe zu verspannen. Dabei unterstützt das Konuselement mit Vorteil eine Montage an der Radnabe, indem das konische Konuselement die Bremsscheibe auf der Radnabe zentriert und gegen einen definierten axialen Anschlag, d. h. die Bremsscheibenanlagefläche, drückt, wodurch eine möglichst exakte Positionierung der Bremsscheibe möglich ist. Zudem verspannt das Konuselement die Bremsscheibe und die Radnabe, indem das Konuselement im montierten Zustand aufspreizend auf die Radnabe und die Bremsscheibe wirkt. Ein weitere Vorteil der radnabenseitigen Kontaktfläche ist, dass ein Teil des im Betrieb auftretenden Bremsmoments über die Kontaktfläche auf die Radnabe übertragen werden kann, so dass das Bremsmoment nicht nur punktuell im Schnittstellenbereich an der Bremsscheibenanlagefläche zwischen der Bremsscheibe und der Radnabe wirkt, sondern zusätzlich über die radnabenseitige Kontaktfläche aufgefangen werden kann. Insbesondere ist die radnabenseitige Kontaktfläche zur Bremsscheibenanlagefläche um einen Abstand versetzt, der mindestens einer im montierten Zustand in axialer Richtung bemessenen - gemittelten - Dicke der Bremsscheibe im Bereich der Bremsscheibenanlagefläche entspricht. Zwischen der Bremsscheibenanlagefläche und der radnabenseitigen Kontaktfläche verläuft die Außenseite der Radnabe vorzugsweise parallel zur Rotationsachse. Weiterhin ist es erfindungsgemäß, dass das Befestigungsmittel, insbesondere ein Schaft der Schraube oder des Bolzens, im montierten Zustand durch die Bremsscheibe durchgreift und in die Radnabe eingreift. Beispielsweise umfasst das Befestigungsmittel an seinem in die Radnabe eingreifenden Ende ein Gewinde, das in ein komplementär ausgebildetes radnabenseitiges Gewinde eingreift und so für die Anbindung der Bremsscheibe an der Radnabe sorgt.

Erfindungsgemäß ist es vorgesehen, dass die radnabenseitige Kontaktfläche die Radnabe zumindest teilweise nach außen - bevorzugt von der Rotationsachse weg - begrenzt, insbesondere senkrecht zur Rotationsachse. Hierdurch kann erreicht werden, dass es auf einfache Weise möglich ist, dass das Befestigungsmittel, welches mit der radnabenseitigen Kontaktfläche in einem montierten Zustand in Kontakt treten soll, gleichzeitig auch mit einer Bremsscheibe in Kontakt treten kann, sodass das Verspannen der beiden Bauteile auf eine einfache Weise erfolgen kann. Darüber hinaus kann durch diese Ausgestaltung auch noch erreicht werden, dass das Befestigungsmittel eine formschlüssige Drehmomentübertragung zwischen Bremsscheibe und Radnabe bewirkt, ähnlich wie eine Passfeder. Nach außen begrenzen kann dabei in diesem Zusammenhang bedeuten, dass die radnabenseitige Kontaktfläche die Radnabe abschnittsweise begrenzt, insbesondere nach radial außen in Bezug auf die Rotationsachse.

Zweckmäßig ist es vorgesehen, dass die Kontaktfläche gegenüber der Rotationsachse um einen Winkel zwischen 1° und 30°, bevorzugt zwischen 2° und 25° und besonders bevorzugt zwischen 5° und 15° geneigt ist. Insbesondere für einen Winkelbereich zwischen 4° und 10° hat sich in vorteilhafter Weise herausgestellt, dass eine radnabenseitige Kontaktfläche bereitgestellt wird, die sich zur Führung der Bremsscheibe bei dessen Aufziehen und der Aufnahme der Bremsmomente nutzen lässt, ohne dabei in radialer Richtung gesehen zu viel Bauraum in Anspruch zu nehmen.

Vorzugsweise ist es vorgesehen, dass sich die Radnabe zur Ausbildung der radnabenseitigen Kontaktfläche in axialer Richtung zur Stirnseite, insbesondere zur Stirnseite, über die die Bremsscheibe aufgezogen wird, hin verjüngt. Der zur Stirnseite hin verjüngende Bereich der Radnabe dient in vorteilhafter Weise als Zentrierhilfe beim Aufziehen der Bremsscheibe auf die Radnabe. Dabei ist es vorteilhaft, wenn die radnabenseitige Kontaktfläche gehärtet, oberflächenbehandelt und/oder beschichtet ist, um einer eventuellen Beschädigung der Radnabe beim Aufziehen der Radnabe entgegenzuwirken. Vorzugsweise ist die Radnabe in Umlaufrichtung gesehen ausschließlich im Bereich der radnabenseitigen Kontaktflächen gehärtet, oberflächenbehandelt und/oder beschichtet.

Zweckmäßig ist es vorgesehen, dass ein Verhältnis zwischen einer in axialer Richtung bemessenen gemittelten Dicke der Bremsscheibe im Bereich der Bremsscheibenanlagefläche zu einer in axialer Richtung bemessenen Länge der radnabenseitigen Kontaktfläche einen Wert zwischen 0,3 und 0,9, bevorzugt zwischen 0,4 und 0,8 und besonders bevorzugt zwischen 0,5 und 0,7 annimmt. Bei einem Verhältnis zwischen 0,5 und 0,7 ist der in axialer Richtung bemessene unmittelbare Kontakt zwischen der Rabnabe und der Bremsscheibe kleiner als der in axialer Richtung bemessene Kontakt zwischen der Radnabe und dem Befestigungsmittel. Dadurch lässt sich der Schnittstellenbereich zwischen Radnabe und Bremscheibe mit Vorteil durch die Eigenschaften des Befestigungsmittels, insbesondere dessen Form, mitbeeinflussen. Beispielsweise kann eine vergrößerte Kontaktfläche zwischen Radnabe und Befestigungsmittel gegenüber einer Kontaktfläche zwischen Radnabe und Bremsscheibe zu einer thermischen Entkopplung zwischen der der Radnabe und der Bremsscheibe wirkungsvoll genutzt werden, beispielsweise indem die Materialwahl des Befestigungsmittels entsprechend angepasst wird.

Vorteilhafterweise ist es vorgesehen, dass die Radnabe einen in radialer Richtung gesehen außenliegenden Kragenbereich und einen in radialer Richtung gesehen innenliegenden Kernbereich aufweist, wobei in axialer Richtung gesehen der innenliegende Kernbereich dicker als der außenliegenden Kragenbereich ist, und wobei die Radnabe im innenliegenden Kernbereich die im Wesentlichen axial verlaufende Primäraussparung zur Anbindung einer Bremsscheibe aufweist. Dadurch lassen sich mit Vorteil höhere Verspannkräfte realisieren, die wiederum höhere Bremsmomente ermöglichen. Zudem lassen sich thermische Effekte, veranlasst durch die Wärmeentwicklung in der Bremsscheibe beim Bremsen, im Vergleich zu Radnaben, deren Primäraussparungen zur Anbindung der Bremsscheibe geringere Klemmlängen zulassen, wirkungsvoller kompensieren. Grundsätzlich ist unter einem Kragenbereich ein ringscheibenförmiger bzw. bordürenförmiger Abschluss der Radnabe zu verstehen. Im montierten Zustand der Radnabe bildet der Kragenbereich den äußersten Umfangsbereich der Radnabe, mit dem die Radnabe vorzugsweise in radialer Richtung und axialer Richtung gesehen zu einer Seite hin abschließt. Vorteilhafterweise ist der Kragenbereich als Anschlußbereich für eine Radfelge ausgebildet bzw. dient der Anordnung einer Radfelge. Beispielsweise nimmt das Verhältnis der radialen Erstreckung des Kragenbereichs zum Durchmesser der Radnabe einen Wert zwischen 0,1 und 0,3, bevorzugt zwischen 0,15 und 0,25 und besonders bevorzugt zwischen 0,21 und 0,24 an. Dabei ist der Kragenbereich im montierten Zustand der Sichtseite des Fahrzeugs zugewandt. Insbesondere ist es vorgesehen, dass der Kragenbereich in radialer Richtung gesehen im Wesentlichen eine in axialer Richtung bemessene konstante Dicke aufweist. Hierbei wird insbesondere unter einer Dicke diejenige Ausdehnung des Kragenbereichs verstanden, die von dem im Betrieb um eine Rotationsachse rotierenden Kragenbereich in Anspruch genommen wird. Dadurch bleiben etwaige lokale Rücksprünge bei der Bestimmung der Dicke unberücksichtigt. Weiterhin ist es vorgesehen, dass der Kernbereich in radialer Richtung gesehen seine axial bemessene Dicke verändert. Vorzugsweise umfasst der Kernbereich einen zentralen Hohlraum, der zur Aufnahme eines Achselements vorgesehen ist. Dabei ist der Kernbereich insbesondere zur Anlage an das Achselement vorgesehen und ummantelt im montierten Zustand das Achselement, beispielsweise einen Achsstummel, zumindest bereichsweise. Weiterhin ist es bevorzugt vorgesehen, dass der Kernbereich und der Kragenbereich unmittelbar in radialer Richtung aneinander anschließen bzw. in einander übergehen. Bevorzugt ist es vorgesehen, dass das Verhältnis der radialen Erstreckung des Kernbereichs zum Durchmesser der Radnabe einen Wert zwischen 0,3 und 0,7, bevorzugt zwischen 0,35 und 0,55 und besonders bevorzugt zwischen 0,4 und 0,5 annimmt. Vorzugsweise ist es vorgesehen, dass es sich bei der Primäraussparung um eine Bohrung, insbesondere eine Durchgangsbohrung handelt. Weiterhin ist es vorzugsweise vorgesehen, dass die Radnabe zur Anbindung einer flachen Bremsscheibe, beispielsweise einer in axialer Richtung 1 bis 5 cm dicken Bremsscheibe, vorgesehen ist. Denkbar ist auch, dass die Primäraussparung in der der Rotationsachse zugewandten Hälfte, bevorzugt in einem der Rotationsachse zugewandten ersten Drittel oder besonders bevorzugt in einem der Rotationsachse zugewandten ersten Viertel des Kernbereichs oder der Radnabe angeordnet ist. Insbesondere ist es vorgesehen, dass die Radnabe einstückig bzw. intergral ausgebildet ist, d. h. die Radnabe ist nicht aus mehreren Bestandteilen zusammengesetzt, sondern Bremsscheibe, Achse und Rad bzw. Radfelge lassen sich an ein einstückiges Bauteil, d. h. die Radnabe, anbinden. Beispielswiese ist die Radnabe einstückig geschmiedet oder gegossen.

Bevorzugt ist es vorgesehen, dass der radnabenseitigen Kontaktfläche ein erster radnabenseitiger Krümmungsradius in einer ersten Schnittebene und ein zweiter radnabenseitiger Krümmungsradius in einer zweiten Schnittebene zuzuordnen ist, wobei die erste Schnittebene und die zweite Schnittebene zueinander axial versetzt sind und senkrecht zu der Rotationsachse verlaufen, wobei im montierten Zustand ein Abstand vom Kragenbereich zur ersten Schnittebene kleiner ist als ein Abstand vom Kragenbereich zur zweiten Schnittebene, wobei der erste radnabenseitige Krümmungsradius größer als der zweite radnabenseitige Krümmungsradius ist, insbesondere wenn der erste Krümmungsradius und der zweite Krümmungsradius jeweils einen Mittelpunkt aufweisen, der von der radnabenseitigen Kontaktfläche aus gesehen der Rotationsachse zugewandt ist und besonderes bevorzugt auf der Rotationsachse liegt. Es ist aber auch vorstellbar, dass dem ersten Krümmungsradius und dem zweiten Krümmungsradius ein Mittelpunkt zugeordnet werden kann, der von der radnabenseitigen Kontaktfläche aus in radialer Richtung gesehen der Rotationsachse abgewandt ist. Vorzugsweise ist dies für eine solche radnabenseitige Kontaktfläche vorgesehen, die das Befestigungsmittel zumindest bereichsweise ummantelt und dadurch mit Vorteil zu einem Formschluss in Umlaufrichtung zwischen dem Befestigungsmittel und der Radnabe beiträgt. Hierbei ist es vorzugsweise vorgesehen, dass der erste radnabenseitige Krümmungsradius kleiner ist als der zweite radnabenseitige Krümmungsradius. Weiterhin ist es vorstellbar, dass die radnabenseitige Kontaktfläche in Umlaufrichtung gesehen unterbrochen ist und beispielsweise die Radnabe in Umlaufrichtung gesehen, beispielsweise in der ersten oder zweiten Schnittebene, ausschließlich in den radnabenseitigen Kontaktflächen gehärtet, oberflächenbeschichtet oder beschichtet ist.

Weiterhin erfindungsgemäß ist eine Bremsscheibe, insbesondere für ein Nutzfahrzeug, die im Betrieb um eine Rotationsachse rotiert, vorgesehen, umfassend eine Radnabenanlagefläche, an der in einem montierten Zustand eine Radnabe anliegt, und eine in axialer Richtung zur Radnabenanlagefläche versetzte und zur Rotationsachse schräg, d. h. zur Rotationsachse in einem Winkel ungleich 0°, 90° oder 180°, verlaufende bremsscheibenseitige Kontaktfläche, an der im montierten Zustand zumindest ein Teil eines Befestigungsmittels, mit dem die Bremsscheibe an der Radnabe befestigt ist, anliegt. Alle für die erfindungsgemäße Radnabe beschriebenen Merkmale und deren Vorteile lassen sich sinngemäß ebenfalls auf die erfindungsgemäße Bremsscheibe übertragen und andersherum.

Vorzugsweise ist es vorgesehen, dass der bremsscheibenseitigen Kontaktfläche ein erster bremsscheibenseitiger Krümmungsradius in einer ersten Schnittebene und ein zweiter bremsscheibenseitiger Krümmungsradius in einer zweiten Schnittebene zuzuordnen ist, wobei die erste Schnittebene und die zweite Schnittebene zueinander axial versetzt sind und senkrecht zu der Rotationsachse verlaufen, wobei im montierten Zustand ein Abstand vom Kragenbereich zur ersten Schnittebene kleiner ist als ein Abstand vom Kragenbereich zur zweiten Schnittebene, wobei der erste Krümmungsradius kleiner als der zweite Krümmungsradius ist. Dabei ist es vorstellbar, dass der erste bremsscheibenseitige Krümmungsradius und der zweite bremsscheibenseitige Krümmungsradius koaxial zur Rotationsachse verlaufen oder in radialer Richtung zur Rotationsachse versetzte Mittelpunkte aufweisen. Beispielsweise nimmt ein Verhältnis zwischen dem ersten bremsscheibenseitigen bzw. dem zweiten bremsscheibenseitigen Krümmungsradius zu einem Krümmungsradius, der einer im montierten Zustand der Rotationsachse zugewandten Innenseite der Bremsscheibe zuzuordnen ist, einen Wert zwischen 0,01 und 0,4, bevorzugt zwischen 0,05 und 0,3 und besonders bevorzugt zwischen 0,1 und 0,2 am. Dadurch ist es mit Vorteil möglich, dass die bremsscheibenseitige Kontaktfläche das Befestigungsmittel zumindest teilweise bzw. stückweise ummantelt, so dass in vorteilhafter Weise ein zusätzlicher Formschluss in Umlaufrichtung zwischen der Bremsscheibe und dem Befestigungsmittel möglich ist. Weiterhin ist es vorgesehen, dass die bremsscheibenseitige Kontaktfläche derart gestaltet ist, dass ein Krümmungsradius in axialer Richtung gesehen zum Kragenbereich hin abnimmt, vorzugsweise kontinuierlich abnimmt.

Erfindungsgemäß ist es vorgesehen, dass die bremsscheibenseitige Kontaktfläche die Bremsscheibe zumindest teilweise nach innen zur Rotationsachse, insbesondere senkrecht zur Rotationsachse, begrenzt. Hierdurch kann erreicht werden, dass es auf einfache Weise möglich ist, dass das Befestigungsmittel, welches mit der bremsscheibenseitigen Kontaktfläche in einem montierten Zustand in Kontakt treten soll, gleichzeitig auch mit einer Radnabe in Kontakt treten kann, sodass das Verspannen der beiden Bauteile auf eine einfache Weise erfolgen kann. Darüber hinaus kann durch diese Ausgestaltung auch noch erreicht werden, dass das Befestigungsmittel eine formschlüssige Drehmomentübertragung zwischen Bremsscheibe und Radnabe bewirkt, ähnlich wie eine Passfeder. Nach innen begrenzen kann dabei in diesem Zusammenhang bedeuten, dass die bremsscheibenseitige Kontaktfläche die Bremsscheibe abschnittsweise zur Rotationsache hin begrenzt. Insbesondere derart, dass die bremsscheibenseitige Kontaktfläche der Rotationsachse zumindest teilweise zugeneigt ist. In anderen Worten kann dies bedeuten, dass die bremsscheibenseitige Kontaktfläche - von der Rotationsachse ausgesehen - von keinem anderen Bestandteil der Bremsscheibe verdeckt ist.

Weiterhin ist es bevorzugt vorgesehen, dass die bremsscheibenseitigen Kontaktflächen in regelmäßigen Abständen in Umlaufrichtung gesehen an der Innenseite der Bremsscheibe angeordnet sind. Vorstellbar ist auch, dass die Radnabe an ihrer Innenseite in den bremsscheibenseitigen Kontaktflächen bzw. im Bereich der bremsscheibenseitigen Kontaktflächen, vorzugsweise ausschließlich in den bremsscheibenseitigen Kontaktflächen bzw. im Bereich der bremsscheibenseitigen Kontaktflächen, gehärtet, oberflächenbehandelt und/oder beschichtet ist.

Zweckmäßigerweise weist die Bremsscheibe zumindest eine Befestigungsnut auf, durch welche sich in einem montierten Zustand ein Befestigungsmittel erstreckt, wobei die Befestigungsnut zur Rotationsachse hin offen ist. Hierdurch kann eine einfache und kostengünstige Anbindung der Bremsscheibe erreicht werden. Darüber hinaus kann durch die zur Rotationsachse hin offene Befestigungsnut erreicht werden, dass die radiale - wärmebedingte - Ausdehnung der Bremsscheibe im Betreib durch das Befestigungsmittel nicht formschlüssig verhindert bzw. behindert wird. Für die Aufnahme des Befestigungsmittels ist es daher zweckmäßig, wenn sich die Befestigungsnut in Richtung der Rotationsachse erstreckt. Vorteilhafterweise ist die Befestigungsnut derart ausgestaltet, dass ein axiales Ende der Befestigungsnut an die bremsscheibenseitige Kontaktfläche angrenzt. Hierdurch kann eine besonders kompakte und mechanisch belastbare Anbindungsmöglichkeit für die Bremsscheibe geschaffen werden.

Erfindungsgemäß ist ebenfalls ein Befestigungsmittel zum Befestigen einer Bremsscheibe an einer Radnabe, die im Betrieb um eine Rotationsachse rotieren, vorgesehen, wobei das Befestigungsmittel eine schräg, d. h. zur Rotationsachse in einem Winkel ungleich 0°, 90° oder 180°, zur Rotationsachse verlaufende befestigungsmittelseitige Kontaktfläche aufweist, an der im montierten Zustand die Radnabe und/oder die Bremsscheibe anliegen. Alle für die erfindungsgemäße Radnabe beschriebenen Merkmale und deren Vorteile lassen sich sinngemäß ebenfalls auf das erfindungsgemäße Befestigungsmittel übertragen und andersherum. Vorzugsweise weist die befestigungsmittelseitige Kontaktfläche einen Winkel gegenüber der Rotationsachse auf, der dem Winkel der radnabenseitigen Kontaktfläche und/oder der bremsscheibenelementseitigen Kontaktfläche gegenüber der Rotationsachse entspricht. Vorzugsweise ist es vorgesehen, dass sich das Befestigungsmittel zumindest bereichsweise in axialer Richtung verjüngt, wobei die befestigungsmittelseitigen Kontaktflächen die Verjüngung des Befestigungsmittels festlegen. Unter Befestigungsmittel ist insbesondere jede Komponente zu verstehen, die zur Anbindung der Bremsscheibe an der Radnabe vorgesehen ist.

Vorteilhafterweise ist es vorgesehen, dass das Befestigungsmittel ein Konuselement aufweist, wobei das Konuselement die befestigungsmittelseitige Kontaktfläche bereitstellt. Das Konuselement gestattet mit Vorteil ein flächiges Anliegen des Befestigungsmittels an der bremsscheibenseitigen Kontaktfläche und der radnabenseitigen Kontaktfläche. Dabei ist das Konuselement vorzugsweise derart ausgestaltet, dass sich das Konuselement in einen von Radnabe und Bremsscheibe begrenzten Zwischenraum einsetzten lässt, insbesondere passgenau, vorzugsweise unter Bildung einer Press- oder Spielpassung, einsetzen lässt. Dabei ist das Konuselement vorzugsweise derart gestaltet, dass es mit einer Stirnseite in axialer Richtung bündig abschließt mit der Bremsscheibe.

Bevorzugt ist es vorgesehen, dass das Befestigungselement ein als Ringsegment oder als Hülse ausgebildetes Konuselement umfasst. Mittels eines als Ringsegment ausgestalteten Konuselements lässt sich eine in Umlaufrichtung gesehen vergleichsweise lange Anlagefläche bereitstellen, an der die bremsscheibenseitige bzw. die radnabenseitige Kontaktfläche und die befestigungsmittelseitige Kontaktfläche aneinander anliegen. Dabei lässt sich ein solches Ringsegment in einer durch die Form des Ringsegments festgelegte Ausrichtung einsetzen. Ein Vorteil, der sich bei der Nutzung einer Hülse ergibt, ist derjenige, dass sich das Hülsenelement ohne zusätzliche Ausrichtung einsetzen lässt und ein zusätzlicher Formschluss in Umlaufrichtung zwischen dem Befestigungsmittel mit der Radnabe bzw. der Bremsscheibe ausgebildet wird, indem das Hülsenelement von der Bremsscheibe und/oder der Radnabe ummantelt wird. Hierzu ist es vorzugsweise vorgesehen, dass das Hülsenelement an bogenförmige Rücksprünge in der Bremsscheibe und der Radnabe angepasst ist.

Vorzugsweise ist es vorgesehen, dass das Befestigungsmittel ein Konuselement aufweist, das eine in axialer Richtung bemessene befestigungsmittelseitige Kontaktfläche bereitstellt, wobei ein Verhältnis zwischen einer in radialer Richtung gemessene Erstreckung des Konuselements zu einer Länge der befestigungsmittelseitige Kontaktfläche ein Wert zwischen 1 und 2 bevorzugt zwischen 1,2 und 1,6 und besonders bevorzugt zwischen 1,25 und 1,5 annimmt. Es kann somit ein vergleichsweise dickes Konuselement verwendet werden. Dadurch lässt sich mittels des Konuselements, insbesondere bei einem Verhältnis zwischen 1,2 und 1,6, eine Klemmlänge des Befestigungsmittels mit Vorteil derart vergrößern, dass eine damit einhergehende Vergrößerung der Verspannkraft eine Aufnahme von höheren Bremsmomenten ermöglicht.

Gemäß der vorliegenden Erfindung ist es vorgesehen, dass das Befestigungsmittel neben dem Konuselement eine Schraube oder einen Bolzen aufweist, wobei vorteilhafterweise eine in axialer Richtung bemessene Schraubkopfhöhe der Schraube oder Bolzenkopfhöhe des Bolzene kleiner ist als die in axialer Richtung bemessene Erstreckung des Konuselements, insbesondere der befestigungsmittelseitigen Kontaktfläche des Konuselements. Das Konuselement ist vorteilhafter dicker als eine Schraubkopfhöhe. Dadurch wird ein Konuselement bereitgestellt, das nicht nur ausreichend die Klemmlänge vergrößert, sondern zusätzlich auch eine ausreichend lange befestigungsmittelseitige Kontaktfläche, die bei der Montage entlang der radnabenseitigen Kontaktfläche geführt werden kann. Weiterhin ist es vorstellbar, dass das Konuselement intergral mit einer Schraube oder einem Bolzen als Befestigungsmittel ausgestaltet ist.

Zweckmäßig ist es vorgesehen, dass das Konuselement ein Innengewinde aufweist. Dadurch lässt sich eine Schraube, die beispielsweise ebenfalls Teil des Befestigungsmittels ist, mit dem Konuselement verschrauben, wodurch mit Vorteil eine Bindung zwischen dem Befestigungsmittel, der Bremsscheibe und der Radnabe weiter vergrößert werden kann. Vorzugsweise lässt sich das Befestigungsmittel von einer Außenseite bzw. einer Sichtseite des Fahrzeugs kommend in die Primäraussparung einlassen, durch die Radnabe hindurchgreifen und anschließend in das Konuselement zum Befestigen der Bremsscheibe an der Radnabe eingreifen.

Weiterhin erfindungsgemäß ist ein System aus einer Radnabe, einem Befestigungsmittel und einer Bremsscheibe vorgesehen, die im montierten Zustand um eine Rotationsachse rotieren, wobei die Radnabe ein Bremsscheibenanlagefläche, an der in einem montierten Zustand eine Bremsscheibe anliegt, und eine in axialer Richtung zur Bremsscheibenanlagefläche versetzte und zur Rotationsachse schräg verlaufende radnabenseitige Kontaktfläche, an der im montierten Zustand zumindest ein Teil eines Befestigungsmittels, mit dem die Bremsscheibe an der Radnabe befestigt ist, anliegt, aufweist, wobei die Bremsscheibe eine Radnabenanlagefläche, an der in einem montierten Zustand eine Bremsscheibe anliegt, und eine in axialer Richtung zur Radnabenanlagefläche versetzte und zur Rotationsachse schräg verlaufende bremsscheibenseitige Kontaktfläche, an der im montierten Zustand zumindest ein Teil des Befestigungsmittels, mit dem die Bremsscheibe an der Radnabe befestigt ist, anliegt, umfasst, und wobei das Befestigungsmittel eine schräg zur Rotationsachse verlaufende befestigungsmittelseitige Kontaktfläche aufweist, an der im montierten Zustand die Radnabe und/oder die Bremsscheibe anliegen. Alle für die erfindungsgemäße Radnabe bzw. Bremsscheibe oder das erfindungsgemäße Befestigungsmittel beschriebenen Merkmale und deren Vorteile lassen sich sinngemäß ebenfalls auf das erfindungsgemäße System übertragen und andersherum.

Vorteilhafterweise ist es vorgesehen, dass die bremsscheibenseitige Kontaktfläche und/oder radnabenseitige Kontaktfläche derart gestaltet sind, dass im montierten Zustand die bremsscheibenseitige Kontaktfläche und/oder die radnabenseitige Kontaktfläche parallel zur befestigungsmittelseitigen Kontaktfläche verläuft.

Dadurch lassen sich möglichst große Anlagefläche bereitstellen, an der die befestigungsmittelseitigen Kontaktflächen an der radnabenseitige bzw. bremsscheibenseitigen Kontaktflächen anliegen.

Zweckmäßig ist es vorgesehen, dass die bremsscheibenseitige Kontaktfläche, die radnabenseitige Kontaktfläche und/oder die befestigungsmittelseitige Kontaktfläche in axialer Richtung durch Kanten begrenzt sind. D. h. die jeweiligen Kontaktflächen werden jeweils mit einer Kante abgeschlossen bzw. in dem Bereich zwischen den Kanten wird jeweils eine ebene Fläche zur Ausbildung der bremsscheibenseitige Kontaktfläche, der radnabenseitigen Kontaktfläche und/oder der befestigungsmittelseitigen Kontaktfläche bereitgestellt. Dabei ist es besonders bevorzugt vorgesehen, dass die radnabenseitige, die bremsscheibenseitige und/oder die befestigungsmittelseitige Kontaktfläche geschlossen sind, d. h. keine Rücksprünge oder Strukturierungen aufweist.

Vorzugsweise ist es vorgesehen, dass im montierten Zustand in radialer Richtung die befestigungsmittelseitigen Kontaktflächen zwischen der bremsscheibenseitigen Kontaktfläche und der radnabenseitigen Kontaktfläche angeordnet sind.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Es zeigt:
- **Fig.1**: eine Radnabe gemäß einer ersten beispielhaften Ausführungsform der vorliegenden Erfindung
- **Fig.2**: Draufsicht auf einen Ausschnitt auf ein System aus Radnabe, Bremsscheibe und Befestigungsmittel gemäß einer ersten beispielhaften Ausführungsform der vorliegenden Erfindung
- **Fig. 3**: perspektivische Ansicht eines Systems aus Radnabe, Bremsscheibe und Befestigungsmittel gemäß einer zweiten beispielhaften Ausführungsform der vorliegenden Erfindung und
- **Fig. 4**: Schnittansicht auf einen Ausschnitt auf ein System aus Radnabe, Bremsscheibe und Befestigungsmittel gemäß einer dritten beispielhaften Ausführungsform der vorliegenden Erfindung
- **Fig. 5**: Schnittansicht eines Systems aus einer Radnabe, Bremsscheibe und Befestigungsmittel gemäß einer vierten beispielhaften Ausführungsform der vorliegenden Erfindung
- **Fig. 6**: perspektivische Schnittansicht auf ein System aus einer Radnabe, Bremsscheibe und Befestigungsmittel gemäß einer weiteren beispielhaften Ausführungsform der vorliegenden Erfindung.

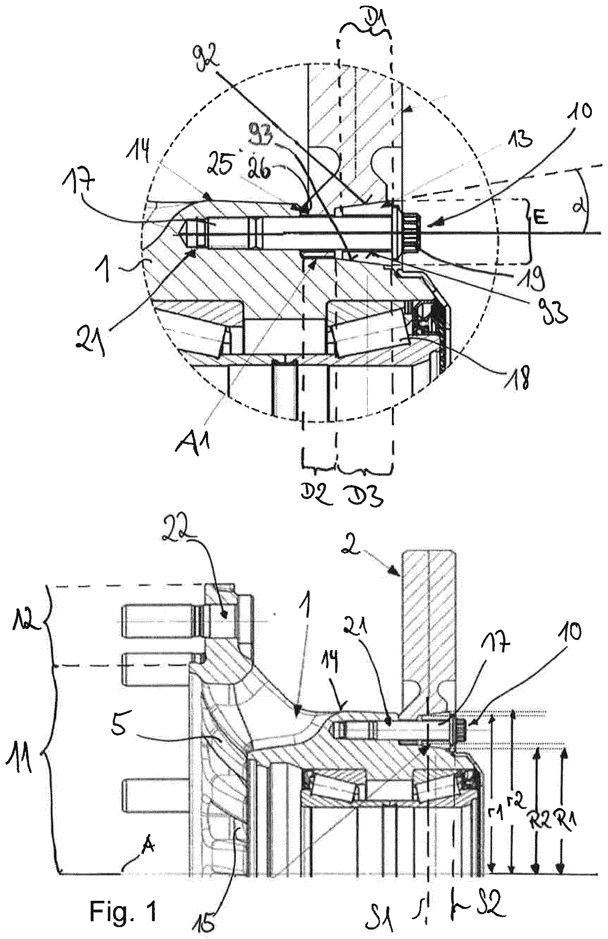

In den **Figur 1** ist eine Radnabe 1 gemäß einer ersten beispielhaften Ausführungsform der vorliegenden Erfindung in einer Schnittansicht dargestellt. Eine solche Radnabe 1 dient dazu, ein Rad an einem Achselement, beispielsweise einem Zapfen, einer Welle oder einer Achse, zu befestigen. Insbesondere ist die Radnabe über ein Wälzlager mit Wälzkörpern 18 an der Achse rotierend gelagert. Neben der Anbindung des Rads ist es weiterhin vorgesehen, dass eine Bremsscheibe 2 drehfest mit der Radnabe 1 verbunden ist. Vorzugsweise handelt es sich um eine Radnabe 1 für ein Nutzfahrzeug. Insbesondere ist es vorgesehen, dass die Radnabe 1 einstückig bzw. integral ausgestaltet ist. D. h. an der einstückigen Radnabe 1 sind sowohl Primäraussparungen 21 zur Anbindung der Bremsscheibe 2 an die Radnabe 1 als auch Sekundäraussparungen 22 zur Anbindung des Rads an die Radnabe 1 vorgesehen. Wesentliche Bestandteile der integral ausgestalteten Radnabe 1 sind ein in radialer Richtung gesehen außenliegender Kragenbereich 12 und ein in radialer Richtung gesehen innenliegender Kernbereich 11, wobei der Kernbereich 11 dicker ist als der Kragenbereich 12. Vorzugsweise ist der Kragenbereich 12 im Wesentlichen ringscheibenförmig ausgestaltet, d. h. eine in axialer Richtung bemessene Dicke des Kragenbereichs 12 ist in radialer Richtung gesehen im Kragenbereich 12 im Wesentlichen konstant. Im Gegensatz zum Kragenbereich 12, ändert sich die in axialer Richtung bemessene Dicke des Kernbereichs 11 mit zunehmenden radialen Abstand von der Rotationsachse A. Vorzugsweise ist die Dicke des Kernbereichs 11 in dem Bereich maximal, in dem die Radnabe 1 im montierten Zustand an dem Achselement anliegt. Weiterhin ist es vorgesehen, dass der Kernbereich 11 sich im Wesentlichen radial erstreckende Rippenelemente 5 aufweist, wobei sich zwischen zwei benachbarten Rippenelementen 5 ein lichter Bereich 15 ausbildet. Insbesondere ist es vorgesehen, dass die Rippenelemente 5 derart ausgestaltet sind, dass sie in axialer Richtung gesehen bereichsweise parallel zur Rotationsachse A verlaufen und zum Kragenbereich 12 hin radial nach außen gebogen sind. Dadurch weitet die Radnabe 1 in axialer Richtung gesehen radial auf. Weiterhin ist es bevorzugt vorgesehen, dass das Rippenelement 5 mit einem ersten Ende unmittelbar an den Kragenbereich 12 anschließt und mit einem zweiten Ende in den Bereich übergeht, in der das Rippenelement 5 eine parallel zur Rotationsachse A verlaufende Mantelaußenfläche 14 ausbildet.

Insbesondere ist es vorgesehen, dass die Primäraussparung 21, über die Bremsscheibe 2 an die Radnabe 1 angebunden wird, im Kernbereich 11, vorzugsweise in einem Bereich, der zwischen der Rotationsachse A und der Mantelaußenfläche 14 liegt, angeordnet ist. Hierbei verläuft die Primäraussparung 21 im Wesentlichen axial. Durch die Anordnung der Primäraussparung 21 im dickeren Kernbereich 11 lassen sich in vorteilhafter Weise größere Klemmlängen erzeugen, als wenn die Primäraussparung 21 zur Anbindung der Bremsscheibe 2 im Kragenbereich 12 angeordnet ist. Mit dieser vergrößerten Klemmlänge geht mit Vorteil eine erhöhte Verspannkraft einher, die schließlich höhere Bremsmomente zulässt. Zudem lassen sich thermische Effekte durch diese konstruktive Anordnung der Primäraussparungen 21 vergleichsweise gut kompensieren.

Weiterhin ist es in der in Figur 1 dargestellten Ausführungsform vorgesehen, dass der Kernbereich 11 eine Bremsscheibenauflagefläche 25 aufweist, in der die Primäraussparung 21 mündet. Im montierten Zustand liegt die Bremsscheibe 2 an der Bremsscheibenanlagefläche 25 an und wird über diese Bremsscheibenanlagefläche 25 an die Radnabe 1 angebunden. Insbesondere ist es vorgesehen, dass die Radnabe 1 in axialer Richtung zur Bremsscheibenanlagefläche 25 versetzt eine radnabenseitige Kontaktfläche 91 aufweist. Insbesondere ist die radnabenseitige Kontaktfläche 91 zur Bremsscheibenanlagefläche 25 in einer vom Kragenbereich 11 bzw. den Rippenelementen 5 abgewandten Richtung axial versetzt. Beispielsweise ist es vorgesehen, dass ein Verhältnis zwischen einer in axialer Richtung bemessenen Dicke D2 der Bremsscheibe 2 im Bereich der Bremsscheibenanlagefläche 25 zu einer in axialer Richtung bemessenen Länge D3 der radnabenseitigen Kontaktfläche 91 einen Wert zwischen 0,3 und 0,9, bevorzugt zwischen 0,4 und 0,8 und besonders bevorzugt zwischen 0,5 und 0,7 annimmt. Vorzugsweise ist ein Abstand zwischen der Bremsscheibenanlagefläche 25 und der radnabenseitigen Kontaktfläche 91 derart dimensioniert, dass im montierten Zustand in axialer Richtung zwischen der radnabenseitigen Kontaktfläche 91 und der Bremsscheibenanlagefläche 25 ein Teil der Bremsscheibe 2 angeordnet ist. Vorzugsweise ist die radnabenseitige Kontaktfläche 91 derart gestaltet, dass sie schräg zur Rotationsachse A verläuft, insbesondere um einen Winkel α zwischen 1° und 30°, bevorzugt zwischen 2° und 25° und besonders bevorzugt zwischen 4° und 10° schräg geneigt. Insbesondere ist der Winkel α angepasst an eine befestigungsseitige Kontaktfläche 93 eines Befestigungsmittels 10 bzw. eines Teils eines Befestigungsmittels 10, mit dem die Bremsscheibe 2 an der Radnabe 1 im montierten Zustand fixiert ist. In dem dargestellten Ausführungsbeispiel ist es vorgesehen, dass die befestigungsmittelseitige Kontaktfläche 93 von einem Konuselement 13 bereitgestellt wird. Dadurch lässt sich ein konisches geformtes Konuselement 13 verwenden, mit dem sich mit Vorteil eine Klemmlänge für das gesamte Befestigungsmittel 10 bzw. das System aus Bremsscheibe 2, Befestigungsmittel 10 und Radnabe 1 weiter vergrößern lässt. Vorzugsweise ist es vorgesehen, dass ein Verhältnis zwischen einer in radialer Richtung gemessenen Erstreckung E der Unterlegscheibe 10 zu einer Länge D1 der befestigungsmittelseitigen Kontaktfläche 93 ein Wert zwischen 0,65 und 0,95 bevorzugt zwischen 0,75 und 0,93 und besonders bevorzugt zwischen 0,82 und 0,92 annimmt. Mit anderen Worten: Es wird ein vergleichsweise dickes Konuselement 13 bereitgestellt. Infolgedessen lassen sich höhere Bremsmomente durch das Befestigungsmittel 10 aufnehmen. Dies gestattet mitunter eine Reduktion der Anzahl der vorgesehenen Anbindungsstellen, über die die Bremsscheibe 2 mit der Radnabe 1 verbunden ist. Weiterhin ist es vorgesehen, dass die Bremsscheibe 2 eine Radnabenanlagefläche 26, an der in einem montierten Zustand die Radnabe 1 anliegt, und eine in axialer Richtung zur Radnabenanlagefläche 26 versetzte und zur Rotationsachse A schräg verlaufende bremsscheibenseitige Kontaktfläche 92 aufweist, an der im montierten Zustand zumindest ein Teil des Befestigungsmittels 10, mit dem die Bremsscheibe 2 an der Radnabe 1 befestigt ist, anliegt. Insbesondere ist im montierten Zustand in radialer Richtung gesehen das Konuselement 13 zwischen der Radnabe 1 und der Bremsscheibe 2 angeordnet. Außerdem ist es vorstellbar, dass die befestigungsmittelseitige Kontaktfläche 93, die mit der die Radnabe 1 in Kontakt steht, größer ist als die Radnabenanlagefläche 26. Dadurch lässt sich beispielsweise durch eine entsprechende Materialwahl des Konuselements 13 eine thermische Kopplung zwischen der Radnabe 1 und der Bremsscheibe 2 reduzieren. Beispielsweise weist das Material, aus dem das Konuselement gefertigt ist, eine gegenüber der Radnabe 1 reduzierte Wärmeleitfähigkeit auf, so dass eine Übertragung der Wärme von der Bremsscheibe 2 auf die Radnabe 1 über das Konuselement 13 reduziert ist.

Weiterhin ist es vorgesehen, dass der bremsscheibenseitige Kontaktfläche 92 in einer ersten Schnittebene S1 ein erster bremsscheibenseitiger Krümmungsradius r1 und in einer zweiten Schnittebene S2 ein zweiter bremsscheibenseitiger Krümmungsradius r2 zuzuordnen ist, wobei die erste Schnittebene S1 und die zweite Schnittebene S2 zueinander in axialer Richtung zueinander versetzt sind und senkrecht zur Rotationsachse A verlaufen. Insbesondere ist die erste Schnittebene S1 näher am Kragenbereich 11 angeordnet als die zweite Schnittebene S2. Ferner ist in der ersten Schnittebene S1 der radnabenseitigen Kontaktfläche 91 ein erster radnabenseitiger Krümmungsradius R1 und in der zweiten Schnittebene S2 ein zweiter radnabenseitiger Krümmungsradius R2 zuzuordnen. Dabei verlaufen der erste und der zweite bremsscheibenseitige Krümmungsradius r1 und r2 sowie der radnabenseitiger Krümmungsradius R1 und der zweite radnabenseitige Krümmungsradius R2 konzentrisch zur Rotationsachse A. Weiterhin ist es vorzugsweise vorgesehen, dass der erste bremsscheibenseitige Krümmungsradius r1 kleiner als der zweite bremsscheibenseitige Krümmungsradius r2 ist. Gleichzeitig ist in der dargestellten Ausführungsform der erste radnabenseitige Krümmungsradius R1 größer als der zweite radnabenseitige Krümmungsradius R2.

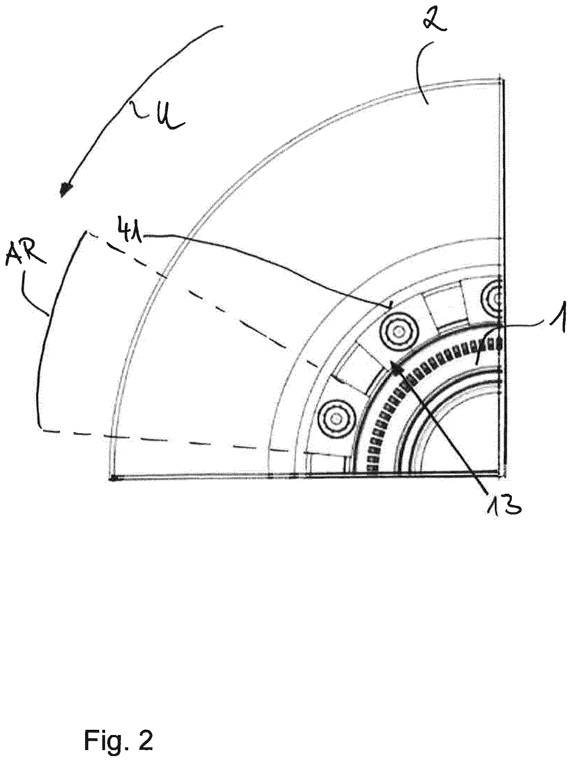

In der **Figur 2** ist eine Draufsicht auf einen Ausschnitt eines Systems aus Radnabe 1, Bremsscheibe 2 und Befestigungsmittel 10 dargestellt. Insbesondere handelt es sich bei dem System um dasjenige, das in Figur 1 in einer Schnittansicht dargestellt ist. Dabei ist es vorgesehen, dass in Umlaufrichtung U gesehen die Konuselemente 13 ringsegmentförmig ausgestaltet sind. Vorzugsweise erstrecken sich die Konuselemente 13 in Umlaufrichtung U soweit, dass im montierten ein Schraubkopf bzw. Bolzenkopf des Befestigungsmittels auf dem Konuselement 13 aufliegt. Denkbar ist auch, dass einem Außenumfang 41 des Konuselements 13 ein Außenradius AR zugeordnet ist und ein Verhältnis zwischen einer radialen Erstreckung des Konuselements 13 zum Außenradius AR einen Wert zwischen 0,5 und 0,9, bevorzugt zwischen 0,6 und 0,75 und besonders bevorzugt zwischen 0,63 und 0,72 annimmt.

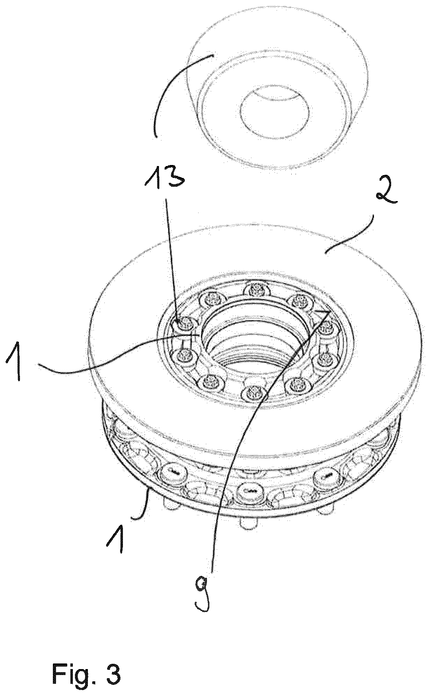

In der **Figur 3** ist perspektivische Ansicht eines Systems aus Radnabe 1, Bremsscheibe 2 und Befestigungsmittel 10 gemäß einer zweiten beispielhaften Ausführungsform der vorliegenden Erfindung dargestellt. Auf der rechten Seite ist zusätzlich die Unterlegscheibe 13 des Befestigungsmittels 10 dargestellt. Dabei unterscheidet sich das System im Vergleich zu dem aus der Figur 1 im Wesentlichen nur durch die Form des Konuselements 13. Statt eines ringsegmentförmigen Unterscheibenelements 13 ist ein hülsenförmiges Konuselement 13 vorgesehen. Entsprechend der Form des Konuselements 13 sind die radnabenseitige Kontaktfläche 91 und die bremsscheibenseitige Kontaktfläche 92 ebenfalls gebogen. Insbesondere umfasst der Kernbereich 11 an seiner Außenseite zur Ausbildung der radnabenseitigen Kontaktfläche 91 eine Aussparung bzw. einen rückspringenden Verlauf, damit die Radnabe 1 für die Verwendung des Konuselements 13 in radialer Richtung nicht erweitert werden muss.

Insbesondere ist es vorgesehen, dass eine in radialer Richtung gesehen innenliegende Innenseite 9 der Bremsscheibe 2 in Umlaufrichtung U gesehen in regelmäßigen Abständen eine gebogene bremsscheibenseitige Kontaktfläche 92 aufweist. Hierbei ist jeder der bremsscheibenseitigen Kontaktflächen 92 ein erster bremsscheibenseitiger Krümmungsradius r1 und eine zweiter bremsscheibenseitiger Krümmungsradius r2 zuzuordnen, wobei der erste bremsscheibenseitige Krümmungsradius r1 und der zweite bremsscheibenseitige Krümmungsradius r2 nichtkonzentrisch zur Rotationsachse A verlaufen und kleiner sind als ein Innenseitenradius, der dem generellen Verlauf der Innenseite 9 der Bremsscheibe 2 zuzuordnen ist. Vorzugsweise verjüngt der bremsscheibenseitige Krümmungsradius der bremsscheibenseitigen Kontaktfläche 92 in Richtung des Kragenbereich 11, vorzugsweise kontinuierlich, so dass der zweite bremsscheibenseitige Krümmungsradius r2 kleiner als der erste bremsscheibenseitige Krümmungsradius r1 ist. Ferner ist es vorgesehen, dass ein Mittelpunkt, der dem radnabenseitigen Krümmungsradius R1, R2 zuzuordnen ist, auf der der Rotationsachse A abgewandten Seite der radnabenseitigen Kontaktfläche angeordnet ist. Entsprechend ist in der dargestellten Ausführungsform der zweite radnabenseitige Krümmungsradius R2 kleiner als der erste radnabenseitige Krümmungsradius R1.

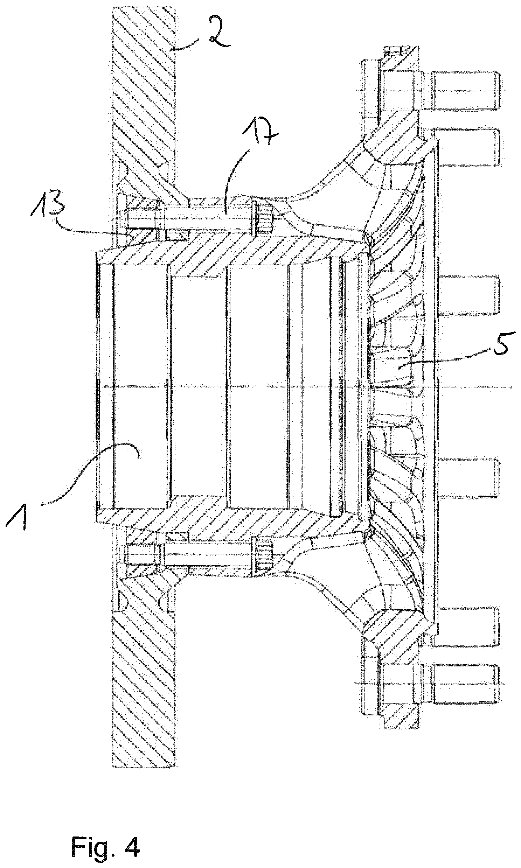

In der **Figur 4** ist eine Schnittansicht auf einen Ausschnitt des Systems aus Radnabe 1, Bremsscheibe 2 und Befestigungsmittel 10 gemäß einer dritten beispielhaften Ausführungsform der vorliegenden Erfindung dargestellt. Dabei unterscheidet sich die dargestellte Ausführungsform im Wesentlichen von denen aus den Figuren 1 bis 3 dahingehend, dass das Konuselement 13 ein Gewinde, insbesondere ein Innengewinde aufweist. Dadurch ist es möglich, eine Schraube 17 von einer Außenseite, d. h. einer Sichtseite des Fahrzeugs, kommend, durch die Radnabe 1 hindurchzuführen und mit dem Gewinde des Konuselements 13 zu verbinden. Dadurch lässt sich der Schraubkopf 19 auf der dem Kragenbereich zugwandten Seite anordnen, so dass auf der dem Kragenbereich abgewandten Seite eine möglichst kompakte Schnittstelle zwischen Radnabe und Bremsscheibe bereitgestellt werden kann.

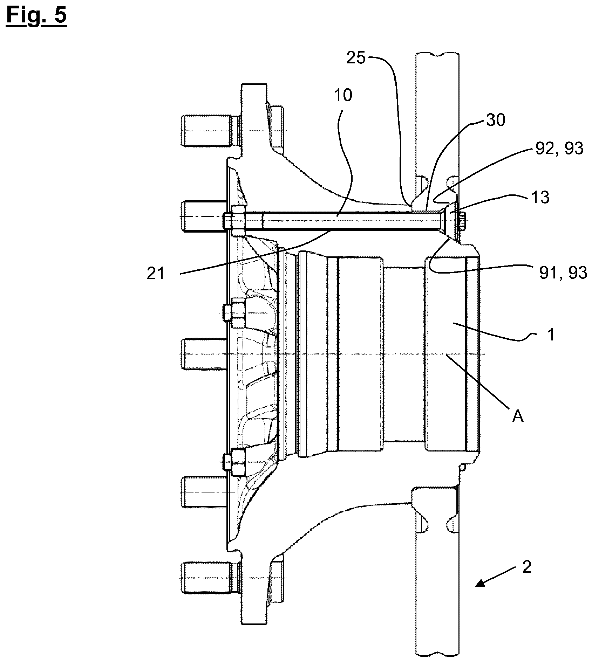

In der **Figur 5** ist eine Schnittansicht auf einen Ausschnitt des Systems aus Radnabe 1, Bremsscheibe 2 und Befestigungsmittel 10 gemäß einer vierten beispielhaften Ausführungsform der vorliegenden Erfindung dargestellt. Die in der Figur 5 dargestellte Radnabe 1 verfügt über eine Aufnahme für ein Radlager und über eine konische radnabenseitige Kontaktfläche 91, welche die Radnabe 1 erfindungsgemäß zumindest teilweise nach außenbegrenzt. An dieser radnabenseitigen Kontaktfläche 91 liegt im montierten Zustand zumindest ein Teil eines Befestigungsmittels 10 an, mit dem die Bremsscheibe 2 an der Radnabe 1 befestigt ist.

Die Radnabe 1 verfügt über eine Vielzahl von Primäraussparungen 21, welche die Radnabe 1 in Richtung der Rotationsachse A vollständig durchdringen. In den Primäraussparungen 21 befinden sich jeweils ein Befestigungsmittel 10, welches in der dargestellten Ausführungsform durch mehrere Bauteile gebildet wird.

Zum einen weist das Befestigungsmittel 10 eine Mutter auf, welche das Befestigungsmittel 10 mit der Radnabe 1 auf der einen Seite verspannt. Auf der anderen Seite weist das Befestigungsmittel 10 ein Konuselement 13 auf. Das Konuselement 13 verfügt dabei über eine befestigungsseitige Kontaktfläche 93.

Die befestigungsseitige Kontaktfläche 93 kontaktiert sowohl die radnabenseitige Kontaktfläche 91 als auch die bremsscheibenseitige Kontaktfläche 92 um so die Bremsscheibe 2 auf der Nabe 1 zu zentrieren als auch die beiden Bauteile miteinander zu verspannen. Zusätzlich bietet diese Art der Ausgestaltung auch noch den Vorteil, dass durch das Konuselement 13 auch noch formschlüssig ein Drehmoment um die Rotationsachse A von der Radnabe 1 auf die Bremsscheibe 2 - oder umgekehrt - übertragen werden kann.

Die bremsscheibenseitige Kontaktfläche 93 begrenzt in der dargestellten Ausführungsform die Bremsscheibe 2 erfindungsgemäß zumindest teilweise nach innen zur Rotationsachse A hin. In Richtung der Rotationsachse A befindet sich direkt angrenzend zu der bremsscheibenseitigen Kontaktfläche 92 eine Befestigungsnut 30, welche zur Rotationsachse A hin offen ist und durch welche sich das Befestigungsmittel 10 erstreckt. Durch dieses Befestigungsmittel 10 wird die Bremsscheibe 2 zur Anlage an der Bremsscheibenanlagefläche 25 gebracht bzw. mit dieser verspannt.

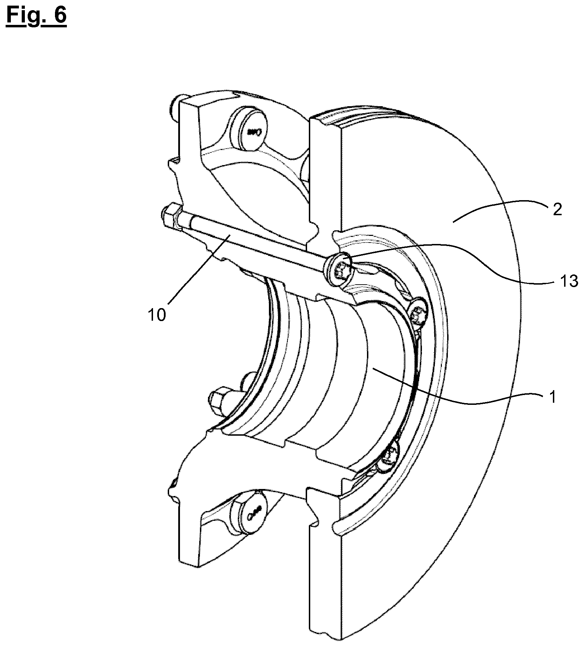

In der **Figur 6** ist eine perspektivische Schnittansicht auf ein System aus einer Radnabe 1, Bremsscheibe 2 und Befestigungsmittel 10 gemäß einer weiteren beispielhaften Ausführungsform der vorliegenden Erfindung gezeigt. Die in der Figur 6 gezeigte Ausführungsform kann beispielsweise eine andere Ansicht zu der in der Figur 5 gezeigten Ausführungsform darstellen.

In der in der Figur 6 gezeigten Ausführungsform erstreckt sich das Befestigungsmittel 10 vollständig durch die Radnabe 1, wobei das Befestigungsmittel ein seinem einen distalen Ende eine Mutter aufweist und an seinem anderen distalen Ende ein Konuselement 13.

Durch dieses Konuselement 13 wird die Bremsscheibe 2 mit der Radnabe 1 verspannt und zusätzlich kann auch noch ein Drehmoment formschlüssig zwischen den der Bremsscheibe 2 und der Radnabe 1 übertragen werden. Dieses Konuselement 13 kann daher ähnlich wie eine Passfeder wirken und gleichzeitig auch noch eine Verspannungswirkung herbei führen.

Um eine sichere Drehmomentübertragung zu erreichen, sind um den Umfang des Systems aus Radnabe 1 und Bremsscheibe 2 eine Vielzahl von Befestigungsmitteln 10 angeordnet.

### Bezugszeichen:

- 1: Radnabe
- 2: Bremsscheibe
- 5: Rippenelement
- 9: Innenseite
- 10: Befestigungsmittel
- 11: Kernbereich
- 12: Kragenbereich
- 13: Konuselement
- 14: Mantelaußenfläche
- 15: lichter Bereich
- 17: Schraube
- 18: Wälzkörper
- 19: Schraubenkopf
- 21: Primäraussparung
- 22: Sekundäraussparung
- 25: Bremsscheibenanlagefläche
- 26: Radnabenanlagefläche
- 30: Befestigungsnut
- 91: radnabenseitige Kontaktfläche
- 92: bremsscheibenseitige Kontaktfläche
- 93: befestigungsmittelseitige Kontaktfläche
- A: Rotationsachse
- α: Winkel
- AR: Außenradius
- D1: Länge der befestigungsmittelseitige Kontaktfläche
- D2: Dicke der Bremsscheibe im Bereich der Bremsscheibenanlagefläche
- D3: Länge der radnabenseitigen Kontaktfläche
- E: radiale Erstreckung des Konuselements
- U: Umlaufrichtung
- R1: erster radnabenseitiger Krümmungsradius
- R2: zweiter radnabenseitiger Krümmungsradius
- r1: erster bremsscheibenseitiger Krümmungsradius
- r2: zweiter bremsscheibenseitiger Krümmungsradius

## Patentansprüche

1. Radnabenanordnung mit einem Befestigungsmittel (10) und einer Radnabe (1), insbesondere für ein Nutzfahrzeug, die im Betrieb um eine Rotationsachse (A) rotiert, die Radnabe umfassend:
- eine Bremsscheibenanlagefläche (25), an der in einem montierten Zustand eine Bremsscheibe (2) anliegt, und
- eine in axialer Richtung zur Bremsscheibenanlagefläche (25) versetzte und zur Rotationsachse (A) schräg verlaufende radnabenseitige Kontaktfläche (91), an der im montierten Zustand zumindest ein Teil eines Befestigungsmittels (10), mit dem die Bremsscheibe (2) an der Radnabe (1) befestigt ist, anliegt,
wobei die radnabenseitige Kontaktfläche (91) die Radnabe (1) zumindest teilweise nach außen begrenzt,
wobei das Befestigungsmittel (10) neben einem Konuselement (13) eine Schraube oder einen Bolzen aufweist,
wobei das Befestigungsmittel im montierten Zustand durch die Bremsscheibe durchgreift und in die Radnabe eingreift.

2. Anordnung gemäß Anspruch 1, wobei die radnabenseitige Kontaktfläche (91) gegenüber der Rotationsachse (A) um einen Winkel (a) zwischen 1° und 30°, bevorzugt zwischen 2° und 25° und besonders bevorzugt zwischen 4° und 10° geneigt ist.

3. Anordnung gemäß einem der vorhergehenden Ansprüche, wobei sich die Radnabe (1) zur Ausbildung der radnabenseitigen Kontaktfläche (91) in axialer Richtung zur Stirnseite hin verjüngt.

4. Anordnung gemäß einem der vorhergehenden Ansprüche, wobei sich ein Verhältnis zwischen einer in axialer Richtung bemessenen Dicke (D2) der Bremsscheibe (2) im Bereich der Bremsscheibenanlagefläche (25) zu einer in axialer Richtung bemessenen Länge (D3) der radnabenseitigen Kontaktfläche (91) einen Wert zwischen 0,3 und 0,9, bevorzugt zwischen 0,4 und 0,8 und besonders bevorzugt zwischen 0,5 und 0,7 annimmt.

5. Anordnung gemäß einem der vorhergehenden Ansprüche, weiter umfassend einen in radialer Richtung gesehen außenliegenden Kragenbereich (12) und
- einen in radialer Richtung gesehen innenliegenden Kernbereich (11), wobei in axialer Richtung gesehen der innenliegende Kernbereich (11) dicker als der außenliegenden Kragenbereich (12) ist, und
wobei die Radnabe (11) im innenliegenden Kernbereich (11) die im Wesentlichen axial verlaufende Primäraussparung (21) zur Anbindung einer Bremsscheibe (2) aufweist.

6. Scheibenanordnung mit einem Befestigungsmittel (10) und eine Bremsscheibe (2), insbesondere für ein Nutzfahrzeug, die im Betrieb um eine Rotationsachse (A) rotiert, die Bremsscheibe umfassend:
- eine Radnabenanlagefläche (26), an der in einem montierten Zustand eine Radnabe (1) anliegt, und
- eine in axialer Richtung zur Radnabenanlagefläche (26) versetzte und zur Rotationsachse (A) schräg verlaufende bremsscheibenseitige Kontaktfläche (92), an der im montierten Zustand zumindest ein Teil eines Befestigungsmittels (10), mit dem die Bremsscheibe (2) an der Radnabe (1) befestigt ist, anliegt,
wobei die bremsscheibenseitige Kontaktfläche (92) die Bremsscheibe (2) zumindest teilweise nach innen zur Rotationsachse (A) begrenzt,
wobei das Befestigungsmittel (10) neben einem Konuselement (13) eine Schraube oder einen Bolzen aufweist,
wobei das Befestigungsmittel im montierten Zustand durch die Bremsscheibe durchgreift und in die Radnabe eingreift.

7. Anordnung gemäß Anspruch 6, wobei die Bremsscheibe (2) zumindest eine Befestigungsnut (30) aufweist, durch welche sich in einem montierten Zustand ein Befestigungsmittel (10) erstreckt, wobei die Befestigungsnut (30) zur Rotationsachse (A) hin offen ist.

8. System aus einer Radnabe (1), einem Befestigungsmittel (10) und einer Bremsscheibe (2), die im montierten Zustand um eine Rotationsachse (A) rotieren, wobei die Radnabe (1)
- ein Bremsscheibenanlagefläche (25), an der in einem montierten Zustand eine Bremsscheibe (2) anliegt, und
- eine in axialer Richtung zur Bremsscheibenanlagefläche (25) versetzte und zur Rotationsachse (A) schräg verlaufende radnabenseitige Kontaktfläche (91), an der im montierten Zustand zumindest ein Teil eines Befestigungsmittels (10), mit dem die Bremsscheibe (2) an der Radnabe (1) befestigt ist, anliegt, wobei die radnabenseitige Kontaktfläche (91) die Radnabe (1) zumindest teilweise nach außen begrenzt,
aufweist,
wobei die Bremsscheibe (2)
- eine Radnabenanlagefläche (26), an der in einem montierten Zustand eine Radnabe (1) anliegt, und
- eine in axialer Richtung zur Radnabenanlagefläche (26) versetzte und zur Rotationsachse (A) schräg verlaufende bremsscheibenseitige Kontaktfläche (92), an der im montierten Zustand zumindest ein Teil des Befestigungsmittels (10), mit dem die Bremsscheibe (2) an der Radnabe (1) befestigt ist, anliegt, wobei die bremsscheibenseitige Kontaktfläche (92) die Bremsscheibe (2) zumindest teilweise nach innen zur Rotationsachse (A) begrenzt, wobei das Befestigungsmittel neben einem Konuselement (13) eine Schraube oder einen Bolzen aufweist und wobei das Befestigungsmittel im montierten Zustand durch die Bremsscheibe durchgreift und in die Radnabe eingreift, umfasst, und
wobei das Befestigungsmittel (10) eine schräg zur Rotationsachse (A) verlaufende befestigungsmittelseitige Kontaktfläche (93) aufweist, an der im montierten Zustand die Radnabe (1) und/oder die Bremsscheibe (2) anliegen.

9. System gemäß Anspruch 8, wobei die bremsscheibenseitige Kontaktfläche (92) und/oder radnabenseitige Kontaktfläche (91) derart gestaltet sind, dass im montierten Zustand die bremsscheibenseitige Kontaktfläche (92) und/oder die radnabenseitige Kontaktfläche (91) parallel zur befestigungsmittelseitigen Kontaktfläche (93) verläuft.

## Claims

1. A wheel hub arrangement with a fastening means (10) and a wheel hub (1), in particular for a utility vehicle, which wheel hub rotates about an axis of rotation (A) during operation, the wheel hub comprising:
- a brake disk abutment surface (25) against which a brake disk (2) bears in an installed state, and
- a wheel-hub-side contact surface (91) which is offset in an axial direction with respect to the brake disk abutment surface (25) and which runs obliquely with respect to the axis of rotation (A) and against which at least a part of a fastening means (10), by which the brake disk (2) is fastened to the wheel hub (1), bears in the installed state,
wherein the wheel-hub-side contact surface (91) at least partially delimits the wheel hub (1) in an outward direction,
wherein the fastening means (10) has a screw or a bolt in addition to a cone element (13),
wherein the fastening means (10), when mounted, passes through the brake disk and engages the wheel hub.

2. The arrangement as claimed in claim 1, wherein the wheel-hub-side contact surface (91) is inclined relative to the axis of rotation (A) by an angle (a) between 1° and 30°, preferably between 2° and 25° and particularly preferably between 4° and 10°.

3. The arrangement as claimed in any of the preceding claims, wherein the wheel hub (1) narrows in an axial direction toward the end side in order to form the wheel-hub-side contact surface (91).

4. The arrangement as claimed in any of the preceding claims, wherein a ratio between a thickness (D2), measured in an axial direction, of the brake disk (2) in the region of the brake disk abutment surface (25) to a length (D3), measured in an axial direction, of the wheel-hub-side contact surface (91) assumes a value between 0.3 and 0.9, preferably between 0.4 and 0.8 and particularly preferably between 0.5 and 0.7.

5. The arrangement as claimed in any of the preceding claims, furthermore comprising a collar region (12) which is situated at the outside as viewed in a radial direction, and
- a core region (11) which is situated at the inside as viewed in a radial direction,
wherein, as viewed in an axial direction, the core region (11) situated at the inside is thicker than the collar region (12) situated at the outside, and wherein the wheel hub (11) has, in the core region (11) situated at the inside, the substantially axially running primary cutout (21) for the attachment of a brake disk (2).

6. A brake disk arrangement with a fastening means (10) and a brake disk (2), in particular for a utility vehicle, which brake disk rotates about an axis of rotation (A) during operation, the brake disk comprising:
- a wheel hub abutment surface (26) against which a wheel hub (1) bears in an installed state, and
- a brake-disk-side contact surface (92) which is offset in an axial direction with respect to the wheel hub abutment surface (26) and which runs obliquely with respect to the axis of rotation (A) and against which at least a part of a fastening means (10), by which the brake disk (2) is fastened to the wheel hub (1), bears in the installed state,
wherein the brake-disk-side contact surface (92) at least partially delimits the brake disk (2) in an inward direction toward the axis of rotation (A), wherein the fastening means (10) has a screw or a bolt in addition to a cone element (13),
wherein the fastening means, when mounted, passes through the brake disk and engages the wheel hub.

7. The arrangement as claimed in claim 6, wherein the brake disk (2) has at least one fastening groove (30) through which a fastening means (10) extends in an installed state, wherein the fastening groove (30) is open toward the axis of rotation (A).

8. A system composed of a wheel hub (1), of a fastening means (10) and of a brake disk (2), which rotate about an axis of rotation (A) in the installed state, wherein the wheel hub (1) has
- a brake disk abutment surface (25) against which a brake disk (2) bears in an installed state, and
- a wheel-hub-side contact surface (91) which is offset in an axial direction with respect to the brake disk abutment surface (25) and which runs obliquely with respect to the axis of rotation (A) and against which at least a part of a fastening means (10), by which the brake disk (2) is fastened to the wheel hub (1), bears in the installed state, wherein the wheel-hub-side contact surface (91) at least partially delimits the wheel hub (1) in an outward direction, wherein the brake disk (2) comprises
- a wheel hub abutment surface (26) against which a wheel hub (1) bears in an installed state, and
- a brake-disk-side contact surface (92) which is offset in an axial direction with respect to the wheel hub abutment surface (26) and which runs obliquely with respect to the axis of rotation (A) and against which at least a part of the fastening means (10), by which the brake disk (2) is fastened to the wheel hub (1), bears in the installed state, wherein the brake-disk-side contact surface (92) at least partially delimits the brake disk (2) in an inward direction toward the axis of rotation (A), wherein the fastening means has a screw or a bolt in addition to a cone element (13), and wherein the fastening means, when mounted, passes through the brake disk and engages the wheel hub, and
wherein the fastening means (10) has a fastening-means-side contact surface (93) which runs obliquely with respect to the axis of rotation (A) and against which the wheel hub (1) and/or the brake disk (2) bear in the installed state.

9. The system as claimed in claim 8, wherein the brake-disk-side contact surface (92) and/or wheel-hub-side contact surface (91) are designed such that, in the installed state, the brake-disk-side contact surface (92) and/or the wheel-hub-side contact surface (91) runs parallel to the fastening-means-side contact surface (93).

## Revendications

1. Ensemble de moyeu de roue (1) comprenant un moyen de fixation (10) et un moyeu de roue (1), en particulier pour un véhicule utilitaire, qui, en fonctionnement, tourne autour d'un axe de rotation (A), le moyeu de roue comprenant :
- une surface d'appui de disque de frein (25), contre laquelle s'appuie un disque de frein (2) dans un état monté, et
- une surface de contact (91) côté moyeu de roue, décalée dans la direction axiale par rapport à la surface d'appui de disque de frein (25) et s'étendant en oblique par rapport à l'axe de rotation (A), surface de contact contre laquelle s'appuie, à l'état monté, au moins une partie d'un moyen de fixation (10) par lequel le disque de frein (2) est fixé au moyeu de roue (1),
dans lequel la surface de contact (91) côté moyeu de roue délimite le moyeu de roue (1) au moins partiellement vers l'extérieur,
le moyen de fixation (10) comprend, outre un élément conique (13), une vis ou un boulon,
à l'état monté, le moyen de fixation traverse le disque de frein et s'engage dans le moyeu de roue.

2. Ensemble selon la revendication 1,
dans lequel la surface de contact (91) côté moyeu de roue est inclinée par rapport à l'axe de rotation (A) d'un angle (a) compris entre 1° et 30°, de préférence entre 2° et 25° et de manière particulièrement préférée entre 4° et 10°.

3. Ensemble selon l'une des revendications précédentes,
dans lequel le moyeu de roue (1) se rétrécit en direction axiale vers la face frontale pour former la surface de contact (91) côté moyeu de roue.

4. Ensemble selon l'une des revendications précédentes,
dans lequel un rapport entre une épaisseur (D2), mesurée dans la direction axiale, du disque de frein (2) au niveau de la surface d'appui de disque de frein (25) et une longueur (D3), mesurée dans la direction axiale, de la surface de contact (91) côté moyeu de roue prend une valeur comprise entre 0,3 et 0,9, de préférence entre 0,4 et 0,8 et de manière particulièrement préférée entre 0,5 et 0,7.

5. Ensemble selon l'une des revendications précédentes, comprenant en outre une zone de collerette (12) extérieure, vue dans la direction radiale, et
- une zone de cœur (11) intérieure, vue dans la direction radiale,
dans lequel, vu dans la direction axiale, la zone de cœur (11) intérieure est plus épaisse que la zone de collerette (12) extérieure, et
le moyeu de roue (11) présente, dans la zone de cœur (11) intérieure, l'évidement primaire (21) s'étendant sensiblement axialement pour le raccordement d'un disque de frein (2).

6. Ensemble de disque comprenant un moyen de fixation (10) et un disque de frein (2), en particulier pour un véhicule utilitaire, qui, en fonctionnement, tourne autour d'un axe de rotation (A), le disque de frein comprenant :
- une surface d'appui de moyeu de roue (26), contre laquelle s'appuie un moyeu de roue (1) dans un état monté, et
- une surface de contact (92) côté disque de frein, décalée dans la direction axiale par rapport à la surface d'appui de moyeu de roue (26) et s'étendant en oblique par rapport à l'axe de rotation (A), surface de contact contre laquelle s'appuie, à l'état monté, au moins une partie d'un moyen de fixation (10) par lequel le disque de frein (2) est fixé au moyeu de roue (1),
dans lequel la surface de contact (92) côté disque de frein délimite le disque de frein (2) par rapport à l'axe de rotation (A) au moins partiellement vers l'intérieur,
le moyen de fixation (10) comprend, outre un élément conique (13), une vis ou un boulon,
à l'état monté, le moyen de fixation traverse le disque de frein et s'engage dans le moyeu de roue.

7. Ensemble selon la revendication 6,
dans lequel le disque de frein (2) présente au moins une rainure de fixation (30) à travers laquelle s'étend un moyen de fixation (10) dans un état monté, la rainure de fixation (30) étant ouverte vers l'axe de rotation (A).

8. Système constitué d'un moyeu de roue (1), d'un moyen de fixation (10) et d'un disque de frein (2), qui, à l'état monté, tournent autour d'un axe de rotation (A),
le moyeu de roue (1) comprenant
- une surface d'appui de disque de frein (25), contre laquelle s'appuie un disque de frein (2) dans un état monté, et
- une surface de contact (91) côté moyeu de roue, décalée dans la direction axiale par rapport à la surface d'appui de disque de frein (25) et s'étendant en oblique par rapport à l'axe de rotation (A), surface de contact contre laquelle s'appuie, à l'état monté, au moins une partie d'un moyen de fixation (10) par lequel le disque de frein (2) est fixé au moyeu de roue (1),
la surface de contact (91) côté moyeu de roue délimitant le moyeu de roue (1) au moins partiellement vers l'extérieur,
le disque de frein (2) comprenant
- une surface d'appui de moyeu de roue (26), contre laquelle s'appuie un moyeu de roue (1) dans un état monté, et
- une surface de contact (92) côté disque de frein, décalée dans la direction axiale par rapport à la surface d'appui de moyeu de roue (26) et s'étendant en oblique par rapport à l'axe de rotation (A), surface de contact contre laquelle s'appuie, à l'état monté, au moins une partie d'un moyen de fixation (10) par lequel le disque de frein (2) est fixé au moyeu de roue (1),
dans lequel la surface de contact (91) côté disque de frein délimite le disque de frein (2) par rapport à l'axe de rotation (A) au moins partiellement vers l'intérieur,
le moyen de fixation comprend, outre un élément conique (13), une vis ou un boulon, et
à l'état monté, le moyen de fixation traverse le disque de frein et s'engage dans le moyeu de roue, et
le moyen de fixation (10) présente une surface de contact (93) côté moyen de fixation qui s'étend en oblique par rapport à l'axe de rotation (A) et contre laquelle le moyeu de roue (1) et/ou le disque de frein (2) s'appuie(nt) à l'état monté.

9. Système selon la revendication 8,
dans lequel la surface de contact (92) côté disque de frein et/ou la surface de contact (91) côté moyeu de roue sont configurées de telle sorte qu'à l'état monté, la surface de contact (92) côté disque de frein et/ou la surface de contact (91) côté moyeu de roue s'étend(ent) parallèlement à la surface de contact (93) côté moyen de fixation.
